(19) Europäisches Patentamt

European Patent Office

Office européen des brevets

(11) Numéro de publication: **0 546 874 B1**

(12) **FASCICULE DE BREVET EUROPEEN**

(45) Date de publication de fascicule du brevet: **21.06.95**  (51) Int. Cl.⁶: **F16L 59/22**

(21) Numéro de dépôt: **92402988.7**

(22) Date de dépôt: **04.11.92**

(54) Produit destiné à isolation des coudes des tuyauteries et son procédé de réalisation.

(30) Priorité: **06.11.91 FR 9113663**

(43) Date de publication de la demande:
**16.06.93 Bulletin 93/24**

(45) Mention de la délivrance du brevet:
**21.06.95 Bulletin 95/25**

(84) Etats contractants désignés:
**AT BE CH DE DK ES FR GB IT LI NL SE**

(56) Documents cités:
**EP-A- 0 205 714**
**DE-A- 2 802 470**
**DE-U- 7 327 507**
**DE-U- 8 801 561**

(73) Titulaire: **ISOVER SAINT-GOBAIN**
**Les Miroirs**
**18, avenue d'Alsace**
**F-92400 Courbevoie (FR)**

(72) Inventeur: **Jausseaume de la Bretesche, Baudoin**
**101, rue du Cherche Midi**
**F-75006 Paris (FR)**

(74) Mandataire: **Breton, Jean-Claude et al**
**SAINT-GOBAIN RECHERCHE**
**39, quai Lucien Lefranc**
**F-93303 Aubervilliers (FR)**

Rank Xerox (UK) Business Services
(3.10/3.09/3.3.3)

# Description

L'invention concerne les produits destinés à l'isolation des tuyauteries qui se présentent sous forme de manchons cylindriques faits à partir de mousses isolantes ou de laines minérales, laines de verre ou laines de roche. Elle concerne, plus particulièrement, l'isolation acoustique et surtout thermique des parties coudées des tuyauteries dans le domaine du chauffage, de la thermique industrielle et de la réfrigération.

Lorsqu'un installateur doit procéder à l'isolation de tuyauteries, par exemple de chauffage, alors qu'elles sont déjà posées à l'intérieur ou à l'extérieur d'un bâtiment, il dispose, pour le faire, de manchons isolants cylindriques appelés "coquilles". Ces manchons qui sont fendus sur leur longueur se posent autour de la tuyauterie et l'opération s'effectue très simplement dans les parties rectilignes. En ce qui concerne les coudes de tuyauterie, il existe deux techniques en présence : ou bien on utilise des coudes préformés ou découpés dans un bloc de matériau identique ou non à celui qui constitue les coquilles, ou bien l'on découpe dans les parties rectilignes de celui-ci à l'aide de gabarits des éléments qui lorsqu'ils seront assemblés permettront de recouvrir la partie coudée de la tuyauterie. La première technique nécessite le stockage d'un grand nombre de parties préformées qui sont d'un coût élevé. La deuxième technique nécessite la mise en oeuvre sur le chantier d'une découpe de plus en plus délicate quand le diamètre augmente, qui nécessite une main-d'oeuvre plus qualifiée et qui revient donc à un prix supérieur.

L'invention se donne pour tâche de fournir un produit destiné à l'isolation des coudes des tuyauteries qui traite simultanément les coudes et les parties droites attenantes, qui assure de bonne performances thermiques, qui soit d'un prix de revient peu élevé et qui soit également facile à stocker.

Les techniques permettant de réaliser des manchons isolants à l'aide de mousses organiques sont connues. En ce qui concerne les laines minérales on connaît également plusieurs techniques pour réaliser des manchons isolants appelés coquilles. C'est ainsi que la demande de brevet européen EP 205 714 propose une méthode pour fabriquer des coquilles en matériau fibreux inorganiques par enroulement d'un feutre constitué des fibres et d'un liant sur un mandrin chauffé.

Toutes ces techniques permettent ainsi de réaliser des cylindres dont le rayon intérieur correspond au rayon extérieur de la tuyauterie à protéger et qui ont une épaisseur d'isolant soit de mousse soit de produit fibreux qui correspond à la résistance thermique que l'on veut obtenir. Ces coquilles se présentent en éléments rectilignes d'une longueur en général de l'ordre du mètre, éventuellement protégées par un film en plastique ou métallique. Ces coquilles sont coupées longitudinalement sur un demi-diamètre au moins de manière à permettre de les ouvrir et d'introduire à l'intérieur la tuyauterie à protéger. Bien qu'il soit possible avec certains systèmes de cintrer légèrement les produits de manière à leur permettre de suivre un trajet curviligne de la tuyauterie, lorsque le rayon de courbure devient trop petit il est impossible de déformer suffisamment le produit pour qu'il épouse parfaitement la partie courbée. C'est pourquoi plusieurs méthodes ont été développées qui permettent de fabriquer séparément les coudes destinés à équiper les angles des tuyauteries.

La première de ces méthodes consiste à découper dans des blocs de mousse des coudes ou à former dans des blocs de laine minérale, en particulier de laine de roche, des coudes qui se raccordent de part et d'autre aux parties rectilignes. Ces coudes sont coupés en deux dans leur plan de symétrie, laissant ainsi une fente traversante qui favorise les déperditions thermiques. Cette technique qui permet d'obtenir des coudes d'une bonne précision qui épousent la tuyauterie et qui se raccordent correctement aux parties rectilignes, est très chère. Par ailleurs le conditionnement des coudes pour les amener jusque sur le chantier nécessite des emballages particuliers, qui eux aussi, augmentent le prix de revient.

Une autre technique plus couramment utilisée consiste à procéder sur le chantier proprement dit à des découpes qui permettent éventuellement, pour les petits diamètres, à l'aide d'une boîte à onglets spéciale telle que celle de la demande de brevet FR 2 633 546, d'obtenir à l'endroit voulu de la coquille cylindrique un évidement de section triangulaire qui permettra ensuite de refermer la coquille pour lui donner l'angle voulu. Cette technique très simple a l'avantage de permettre d'obtenir sur chantier n'importe quel angle à condition d'adapter l'angle de découpe aux résultats que l'on recherche. Elle est également très bon marché. Cependant, les isolations que l'on obtient au niveau des coudes de tuyauterie ne sont pas d'excellente qualité. En effet, le rayon de courbure d'un angle de tuyauterie n'est jamais nul. En revanche, la partie coudée de la coquille obtenue par le procédé précédent fait un angle vif à l'endroit du raccordement. Il s'ensuit que l'isolant ne suit pas exactement la surface du tuyau. En certains endroits l'isolant est comprimé et au contraire en d'autres endroits un espace reste libre entre la surface du tuyau et l'isolant. De plus, sur chantier, l'angle n'est jamais exactement ajusté et les segments ne sont donc jamais jointifs. Cependant, il est essentiel, en particulier dans le cas de l'isolation phonique que le matériau isolant constitue un ensemble parfaitement étanche. C'est pour pallier ces différents inconvénients que la technique de l'invention a été développée.

L'invention propose dans la première de ses variantes un produit constitué d'éléments de coquilles isolantes cylindriques et destiné à réaliser un manchon isolant autour d'un coude d'angle $\alpha$ d'une tuyauterie dont les éléments de coquilles intermédiaires sont des cylindres, dont les faces appartiennent à des plans formant un dièdre dont le plan bissecteur est perpendiculaire à l'axe du cylindre, au nombre de n, identiques s'ils sont plusieurs, avec leurs deux faces sensiblement planes faisant avec les sections droites des coquilles des angles respectifs de + $\beta$ et - $\beta$ tels que :

$$\beta = \alpha/(2n + 2)$$

tandis que leur génératrice la plus longue a une longueur b telle que :

$$b = 2 (R + d/2 + e) \, tg\beta$$

où R est le rayon de courbure de la tuyauterie, d son diamètre et e l'épaisseur des parois de la coquille, des parties rectilignes des coquilles isolantes cylindriques voisines des coudes se terminent par des faces dont les angles font un angle $\beta$ avec les sections droites des coquilles.

Dans l'autre variante, du produit, les angles $\beta$ respectent la relation $\beta = \alpha /2n$. Dans ce cas, les coquilles cylindriques voisines du coude se terminent par des sections droites.

L'invention concerne également le procédé permettant de réaliser l'isolation des coudes de tuyauterie d'angle $\alpha$, de rayon de courbure R et de diamètre d à l'aide de coquilles isolantes cylindriques de diamètre intérieur d et d'épaisseur e. Dans la première variante du procédé, l'on tronçonne une coquille isolante cylindrique selon des sections sensiblement planes, toutes perpendiculaires à un même plan passant par son axe, les plans de découpe faisant des angles alternativement de + $\beta$ et - $\beta$ par rapport aux sections droites de la coquille, tels que :

$$\beta = \alpha/(2n + 2)$$

le nombre de découpes étant égal à n + 1, et les éléments de coquilles obtenus ayant leur plus grande génératrice égale à b tel que :

$$b = 2 (R + d/2 + e) \, tg\beta$$

et l'on assemble les parties rectilignes restantes et les éléments de coquilles cylindriques intermédiaires de manière à obtenir l'angle maximum possible.

La deuxième variante est un procédé dans lequel l'on tronçonne une coquille isolante cylindrique selon des sections sensiblement planes, toutes perpendiculaires à un même plan passant par son axe, ces plans faisant avec les sections droites de la coquille des angles alternativement de + $\beta$ et de - $\beta$ tels que :

$$\beta = \alpha/2n$$

les éléments de coquilles ainsi obtenus ayant leur plus grande génératrice d'une longueur b telle que :

$$b = 2 (R + d/2 + e) \, tg\beta$$

et où l'on équipe de n éléments de coquilles ainsi obtenus le coude de la tuyauterie, les parties de coquilles rectilignes voisins se terminant par des sections droites.

Avantageusement, après tronçonnage des coquilles, les éléments tronçonnés sont conditionnés dans la position qu'ils occupaient avant leur tronçonnage et de préférence conservés sous cette forme jusqu'à leur exploitation sur le chantier. Ils sont alors de préférence maintenus en place grâce à un film thermorétractable.

Dans les deux procédés, on prévoit éventuellement, immédiatement après la mise en place des éléments de coquilles cylindriques intermédiaires ou des parties rectilignes sur la tuyauterie de les enrober dans un film souple ou un tissu adhésifs.

La technique de l'invention présente par rapport aux techniques antérieures un certain nombre d'avantages manifestes. Tout d'abord, elle résout le problème de l'isolation dans les coudes des tuyauteries. Quel que soit le rayon du coude ou quel que soit l'angle on trouvera toujours une solution qui permettra de suivre fidèlement la surface de la tuyauterie avec l'isolant en limitant la compression et l'écartement de sa surface et sans garder des espaces vides entre les tronçons. La technique de l'invention permet donc d'avoir les mêmes avantages que celle des coudes formés par mise en forme, moulage, ou découpe dans un bloc en laine minérale ou une mousse, mais avec un prix de revient qui est beaucoup plus bas. L'invention permet de traiter simultanément les coudes et les parties droites attenantes, ne faisant plus de l'isolation des coudes une opération à part. Par ailleurs, en reconstituant la coquille d'origine, on peut conditionner les coudes sous une forme rectiligne maintenue par exemple grâce à un film rétractable, ce qui permet d'avoir les mêmes emballages que pour les coquilles ordinaires d'où gain de place lors du stockage et économie puisqu'on n'a pas besoin d'un emballage spécial.

Les figures et la description qui vont suivre permettront de comprendre le fonctionnement de l'invention.

La figure 1 représente une coquille de matériau isolant fait de mousse ou de fibres.

La figure 2 schématise le fonctionnement de l'invention dans le cas d'un seul élément de coquille cylindrique intermédiaire.

Sur la figure 3 la tuyauterie fait un angle droit et le manchon a deux éléments de coquille cylindrique intermédiaires.

Sur la figure 4 le même coude est épousé plus étroitement par l'isolant grâce à l'utilisation de trois éléments de coquille cylindrique intermédiaires,

La figure 5 représente une tuyauterie avec un angle quelconque.

La figure 6, elle, montre une variante de la méthode de découpe de l'invention.

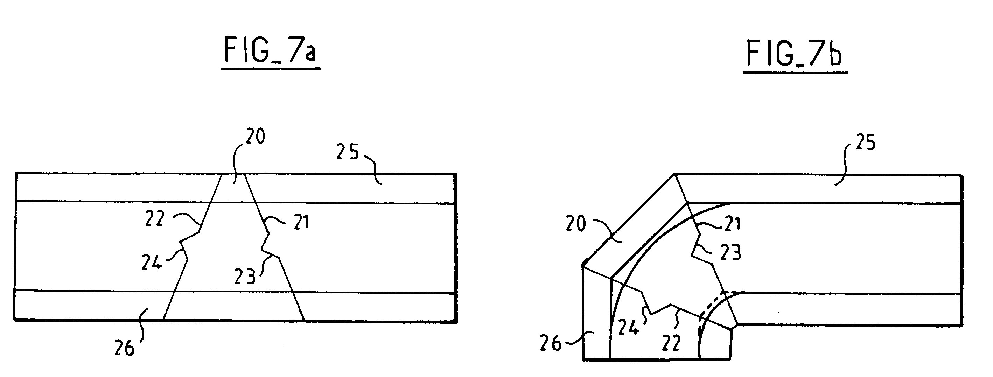

Quant à la figure 7, elle représente un moyen simple pour donner aux éléments de coquille cylindrique la bonne position.

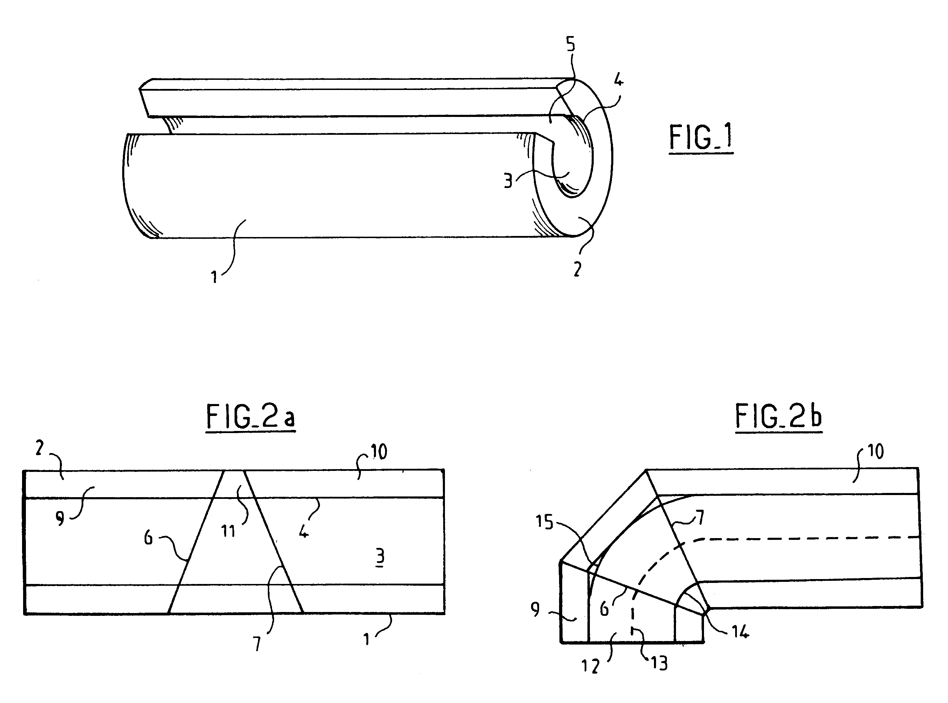

Sur la figure 1 on a représenté une coquille de matériau isolant telle qu'elle se présente dans la majorité des cas. Elle est cylindrique, constituée d'un matériau isolant 2 soit une mousse, en général organique, mais éventuellement aussi en verre-mousse, ou bien en matériau fibreux le plus souvent minéral, à base de laine de roche ou de laine de verre associées par un liant. Les deux surfaces, la surface extérieure 1 et la surface intérieure 4 sont cylindriques. Lorsque la coquille sera posée, la tuyauterie viendra occuper l'espace intérieur 3 de la coquille. Pour permettre au manchon de venir recouvrir la tuyauterie on a prévu une fente longitudinale 5 qui s'étend sur une épaisseur de la coquille et s'étend même parfois sur une certaine profondeur, du côté opposé.

Sur la figure 2a on a représenté une coquille telle qu'elle est juste après son tronçonnage qui a créé un seul élément intermédiaire, il permettra ensuite d'équiper un coude à angle droit. En 9 et 10, on voit les parties rectilignes du manchon cylindrique et en 11 l'élément intermédiaire. Les faces planes (6 et 7) dudit élément intermédiaire font avec la section droite du cylindre un angle $\beta$. Cet angle est dans le cas de la figure de 22,5°, c'est-à-dire précisément le quart de l'angle droit que fait la tuyauterie. Pour définir complètement l'élément intermédiaire 11, il suffit en plus de connaître soit la longueur, a, de sa plus courte génératrice, en partie supérieure de la figure 2a, soit la longueur, b, de sa plus longue génératrice, en partie basse de la figure. Ces grandeurs dépendent des caractéristiques du manchon isolant et des caractéristiques de la tuyauterie, en particulier du rayon de courbure, R, du coude. Les formules générales permettant de les calculer seront données plus loin.

Sur la figure 2b on a représenté la coquille et son coude en position sur la tuyauterie. On voit en 12 la tuyauterie et en 13 sa fibre neutre qui permet de définir le rayon de courbure du coude. Comme précédemment on retrouve en 9 la première partie rectiligne de la coquille et en 10 sa deuxième partie rectiligne, mais cette fois le manchon a été inversé c'est-à-dire qu'on lui a fait subir une rotation de 180° autour de son axe. Sur la coupe de la figure 2b on voit en 15 le pourtour extérieur de la tuyauterie qui est légèrement écarté de l'isolant. En revanche, le pourtour intérieur 14 de la tuyauterie écrase légèrement l'isolant dans cette zone.

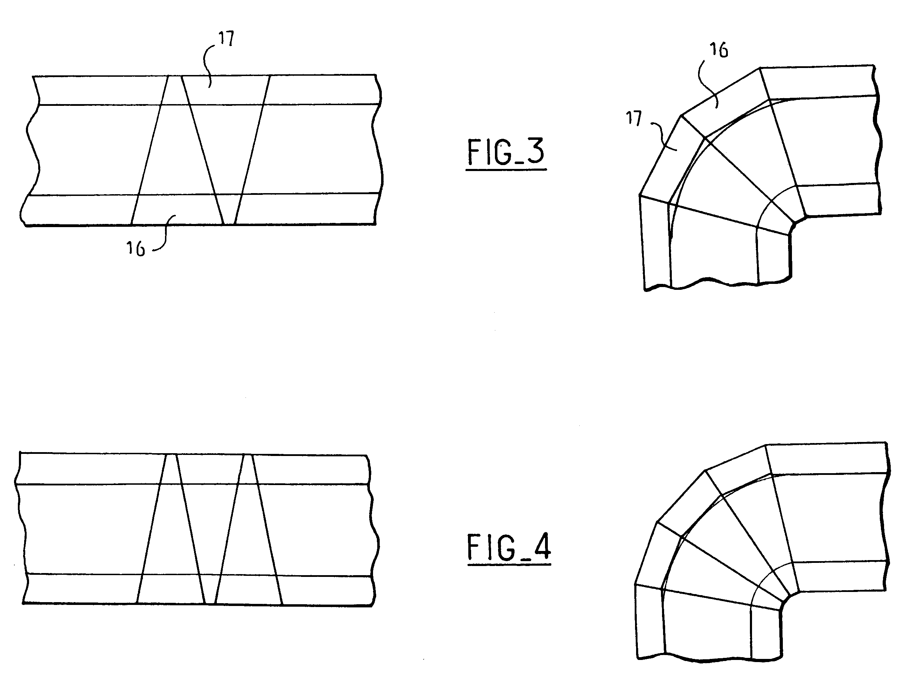

Sur la figure 3 le problème était exactement le même. Il s'agissait pour la même coquille de recouvrir le même coude mais on désirait avoir une meilleure isolation, c'est-à-dire qu'on voulait diminuer l'espace perdu à l'extérieur de la courbe et diminuer l'écrasement de l'isolant à l'intérieur. Pour cela, au lieu d'un élément intermédiaire, on en a découpé deux dans la coquille. Les angles $\beta$ faits par leurs faces avec les sections droites de la coquille sont ici de 15° alternativement d'un côté et de l'autre par rapport à ces sections droites. On voit en 16 le premier de ces éléments intermédiaires, et en 17 le second. Comme précédemment, on positionne les éléments intermédiaires sur le coude de la tuyauterie de manière à ce que leur partie la plus large soit à l'extérieur de la courbe mais à la différence de ce qui précède, ici on a également fait tourner la partie rectiligne de droite de la coquille de manière à ce qu'elle participe à la création du coude. On voit manifestement sur la figure 3 que l'isolation est bien plus performante que dans le cas de la figure 2.

La situation est encore meilleure sur la figure 4 où cette fois on dispose de trois éléments intermédiaires. On voit ici que les surfaces de la tuyauterie et les surfaces internes des parties rectilignes des coquilles ainsi que des éléments intermédiaires sont en contact étroit sur toute leur longueur. Sur la partie gauche de la figure 4, on voit qu'on a effectué n + 1 = 4 découpes pour créer n = 3 éléments intermédiaires. Les découpes font avec les sections droites de la coquille, un angle de 11,25°.

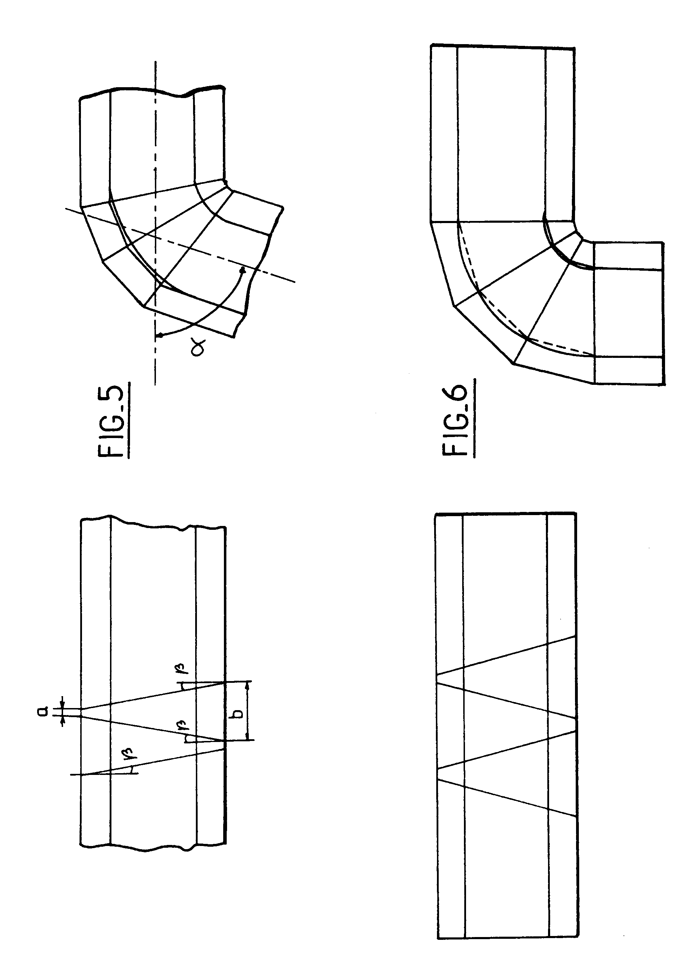

La figure 5 nous présente le cas général du système préféré de l'invention. Ici l'angle $\alpha$ du coude de la tuyauterie est de 60°. Le nombre n choisi pour les éléments intermédiaires est de deux. Par ailleurs, le rayon de courbure de la tuyauterie est appelé R. Le diamètre extérieur de la tuyauterie est d et l'épaisseur de l'isolant e. Les formules générales qui permettent de définir les éléments intermédiaires conformes à l'invention sont :

$$\beta = \alpha/(2n + 2)$$

$$a = 2 (R-d/2 - e) \, tg\beta$$
$$b = 2 (R + d/2 + e) \, tg\beta$$

où a est la longueur de la plus courte génératrice de l'élément intermédiaire et b celle de sa plus longue génératrice.

Ces formules permettent dans chaque cas de définir les conditions de mise en oeuvre de la méthode conforme à l'invention. Une fois choisi le nombre n de tronçons, on calcule $\beta$ par la première formule puis on alterne les plans de découpe de la coquille et en les orientant selon $+ \beta$ ou $- \beta$ et en les séparant par "a" au point le plus proche et donc par "b" au point le plus éloigné. Tous les exemples des figures 2 à 5 ont été réalisés en respectant les paramètres de découpe précédents.

La méthode qu'on vient de décrire peut aussi bien être mise en oeuvre dans le cadre d'une production artisanale où en fonction du matériau dont on dispose pour les coquilles et en fonction des caractéristiques particulières de la tuyauterie et du coude de celle-ci, on définira avec précision après avoir choisi le nombre d'éléments intermédiaires n, les paramètres de chaque élément intermédiaire et des extrémités des coquilles rectilignes qui les jouxtent. Mais il est également possible dans le cas où les coudes sont des coudes normalisés comme c'est courant dans les installations industrielles de prévoir des caractéristiques standard pour définir une fois pour toutes des coudes universels. Dans ce dernier cas, l'avantage principal de la méthode de l'invention indépendamment de son faible coût, est de traiter simultanément l'isolation des coudes et des parties droites attenantes, c'est aussi de permettre de stocker ces coudes sous forme rectiligne, c'est-à-dire de manière tout à fait analogue aux coquilles rectilignes standard.

Le système qui vient d'être décrit permet d'économiser au maximum les chutes de coquilles perdues. En effet, les parties rectilignes en amont et en aval d'un coude posé sont justement constituées par les parties rectilignes qui lors de la découpe se trouvent de part et d'autre des éléments intermédiaires. Chaque coude posé se termine alors par une face perpendiculaire et peut se raccorder à n'importe quel autre élément rectiligne.

On ne sortirait pas du cadre de l'invention en réalisant un système tel que celui représenté figure 6. On voit sur cette figure trois éléments intermédiaires dont les surfaces de découpe font avec la section droite de la coquille un angle $\beta$ tel que $\beta = \alpha/2n$. Les grandes et petites génératrices b et a des éléments intermédiaires sont calculées par les mêmes formules que précédemment. La différence essentielle avec les exemples précédents est qu'ici le raccordement du coude proprement dit se fait par une section droite avec les coquilles rectilignes voisines. L'inconvénient majeur est que les parties tronçonnées qui subsistent à droite et à gauche des n éléments intermédiaires sont inutilisables C'est pourquoi dans ce cas il est intéressant de tronçonner l'ensemble de la coquille rectiligne qui constituera ainsi, l'opération terminée, un réservoir d'éléments intermédiaires destinés à équiper tous les coudes identiques entre eux.

Une variante avantageuse de l'invention représentée figure 7 permet de retrouver très facilement l'orientation exacte à donner à chaque élément intermédiaire lors de son montage sur le coude.

Lors du tronçonnage de la coquille rectiligne de départ, au lieu de réaliser une découpe selon un plan comme décrit plus haut, l'on s'arrange pour équiper cette face découpée d'une nervure, en relief d'un côté et en creux de l'autre, qui est symétrique par rapport à l'axe de la face. Au moment de l'assemblage sur le coude, que l'élément intermédiaire reste dans sa position d'origine (comme par exemple, l'élément intermédiaire du milieu dans le cas de trois éléments) ou qu'il tourne de 180° par rapport à l'axe de la face, on trouvera immédiatement sa position en encastrant la nervure de sa face dans la nervure complémentaire de la face vis à vis.

Dans le cas où la découpe s'effectue à l'aide d'une scie à fil comme pour les coquilles de laine minérale, il suffit de s'écarter légèrement de la trajectoire plane du fil, à l'approche de l'axe de la face pour retrouver ce même plan, de manière symétrique, après avoir dépassé cet axe. On dispose ainsi d'une nervure rectiligne qui constitue une "onde" symétrique par rapport à l'axe de l'ellipse constituant la section des éléments. C'est ce qu'on a représenté figure 7. Au moment de séparer l'élément 20 du morceau rectiligne voisin 25, au lieu de créer une simple section plane comme la section 7 de la figure 2a, on crée une face en relief qui est symétrique par rapport à l'axe de l'ellipse que constituerait cette section plane. D'une manière générale, à part cette symétrie, la forme de ce relief est quelconque. Sur la figure, la forme de cette nervure 23 est très simple, elle est prismatique à section triangle rectangle isocèle et orientée selon le petit axe de l'ellipse. L'autre face 22 de l'élément intermédiaire 20 possède une forme identique avec ses courbures du même côté que la première face. Elle possède donc une nervure 24 en relief (alors que la nervure 23 était en creux sur ce même élément intermédiaire 20). Dans le cas du procédé correspondant aux figures 2 à 5, il n'est pas nécessaire que la nervure 23 et la nervure 24 soient identiques. En effet, la face 21 située entre le tronçon rectiligne 25 et l'élément intermédiaire 20 se retrouve entre ces deux mêmes éléments lorsque l'isolant est posé sur le coude (figure 7b). C'est seulement avec le procédé de la figure 6, où les tronçons rectilignes ont une origine différente que les éléments intermédiaires qu'il faut donner à leurs faces des formes précises, définies et complémentaires.

Les avantages de la technique de l'invention par rapport à l'art antérieur sont multiples. D'une part, elle règle à la fois le problème des coudes et des parties rectilignes attenantes tout en assurant de bonnes performances thermiques et même acoustiques puisqu'elle supprime systématiquement les espaces entre tronçons et d'autre part, elle est meilleur marché. En effet, elle nécessite moins de main d'oeuvre sur le chantier que la méthode artisanale où l'on découpait les sections des coquilles sur place. Elle est évidemment également moins chère que la technique industrielle antérieure qui consistait à réaliser tous les types de coudes par formage à partir d'un matelas fibreux ou à partir d'une masse en mousse rigide avec comme variante dans ce dernier cas le moulage direct. Du point de vue du stockage on a vu que le fait de pouvoir stocker les coudes sous leur forme découpée d'origine avait l'avantage de permettre de n'utiliser qu'un seul type d'emballage aussi bien pour les coquilles rectilignes que pour les coquilles tronçonnées destinées à équiper les coudes.

La souplesse du procédé de l'invention est également à noter. En effet, quelles que soient les exigences de qualité au niveau de l'isolation, on peut, en choisissant le nombre de tronçons n, atteindre la qualité que l'on souhaite.

**Revendications**

1. Produit constitué d'un ou plusieurs éléments de coquilles isolantes cylindriques issus de coquilles isolantes ayant la forme de cylindres droits et destiné à réaliser un manchon isolant autour d'un coude d'angle $\alpha$ d'une tuyauterie (12) **caractérisé en ce que** n éléments de coquilles intermédiaires (11), identiques s'ils sont plusieurs, sont des cylindres dont les faces (6, 7) appartiennent à des plans formant un dièdre dont le plan bissecteur est perpendiculaire à l'axe du cylindre, que leurs deux faces sensiblement planes (6, 7) de contour elliptique font avec les sections droites des coquilles des angles respectifs de $+ \beta$ et $- \beta$ tels que :

$$\beta = \alpha/(2n + 2)$$

que leur génératrice la plus longue a une longueur b telle que :

$$b = 2 (R + d/2 + e) \, tg\beta$$

où R est le rayon de courbure de la tuyauterie, d son diamètre et e l'épaisseur des parois de la coquille et en ce que des parties rectilignes des coquilles isolantes cylindriques destinées à être voisines des coudes se terminent par des faces (6, 7) dont les angles font un angle $\beta$ avec les sections droites des coquilles.

2. Produit constitué d'un ou plusieurs éléments de coquilles isolantes cylindriques issus de coquilles isolantes ayant la forme de cylindres droits et destiné à réaliser un manchon isolant autour d'un coude d'angle $\alpha$ d'une tuyauterie, **caractérisé en ce que** n éléments de coquilles intermédiaires (11), identiques s'ils sont plusieurs, sont des cylindres dont les faces (6, 7) appartiennent à des plans formant un dièdre dont le plan bissecteur est perpendiculaire à l'axe du cylindre, que leurs deux faces sensiblement planes de contour elliptique font avec les sections droites des coquilles des angles respectifs $+ \beta$ et $- \beta$ tels que :

$$\beta = \alpha/2n$$

et que leur génératrice la plus longue a une longueur b telle que :

$$b = 2 (R + d/2 + e) \, tg\beta$$

où R est le rayon de courbure de la tuyauterie, d son diamètre et e l'épaisseur des parois de la coquille.

3. Produit selon la revendication 2, **caractérisé en ce que** des parties rectilignes des coquilles isolantes destinées à être voisines du coude se terminent par des sections droites.

4. Produit selon l'une des revendications précédentes, **caractérisé en ce que** les éléments de coquille cylindriques intermédiaires et, éventuellement, les parties rectilignes voisines, sont conditionnés de manière à reconstituer tout ou partie de la coquille isolante cylindrique d'origine.

5. Produit selon la revendication 4, **caractérisé en ce que** c'est un film thermorétractable qui maintient en place les éléments cylindriques intermédiaires et, éventuellement, les parties rectilignes.

6. Produit selon l'une des revendications précédentes, **caractérisé en ce que** les faces (21, 22) des éléments de coquilles (20) comportent des éléments en relief (24) ou en creux (23) dont la forme est symétrique par rapport aux axes desdites faces et en ce que les faces associées des parties de coquilles voisines comportent une forme complémentaire.

7. Produit selon la revendication 6, **caractérisé en ce que** les éléments en relief sont des nervures rectilignes orientées selon le petit axe du contour elliptique des faces.

8. Procédé pour réaliser l'isolation d'un coude de tuyauterie d'angle $\alpha$, de rayon de courbure R et de diamètre d à l'aide de coquilles isolantes ayant la forme d'un cylindre droit de diamètre intérieur d et d'épaiseur e, **caractérisé en ce que** l'on tronçonne la coquille isolante ayant la forme d'un cylindre droit selon des sections sensiblement planes, toutes perpendiculaires à un même plan passant par son axe, les plans de découpe faisant des angles alternativement de + $\beta$ et - $\beta$ par rapport aux sections droites de la coquille, tels que :

$$\beta = \alpha/(2n + 2)$$

le nombre de découpes étant égal à n + 1 , en ce que les éléments de coquilles obtenus ont leur plus grande génératrice égale à b tel que :

$$b = 2 (R + d/2 + e) \, tg\beta$$

**et en ce que** l'on assemble les parties rectilignes restantes et les éléments de coquilles cylindriques intermédiaires de manière à obtenir l'angle maximum possible.

9. Procédé pour réaliser l'isolation d'un coude de tuyauterie d'angle $\alpha$, de rayon de courbure R et de diamètre d à l'aide de coquilles isolantes ayant la forme d'un cylindre droit de diamètre intérieur d et d'épaisseur e, **caractérisé en ce que** l'on tronçonne une telle coquille isolante cylindrique selon des sections sensiblement planes, toutes perpendiculaires à un même plan passant par son axe, ces plans faisant avec les sections droites de la coquille des angles alternativement de + $\beta$ et de - $\beta$ tels que :

$$\beta = \alpha/2n$$

les éléments de coquilles ainsi obtenus ayant leur plus grande génératrice d' une longueur b telle que :

$$b = 2 (R + d/2 + e) \, tg\beta$$

**et en ce que** l'on équipe de n éléments de coquilles ainsi obtenus le coude de la tuyauterie, les parties de coquilles rectilignes voisines se terminant par des sections droites.

10. Procédé selon la revendication 8 ou la revendication 9, **caractérisé en ce que,** immédiatement après la mise en place des éléments de coquilles cylindriques intérmédiaires ou des parties de coquilles rectilignes, on les enrobe dans un film souple ou un tissu adhésifs.

11. Procédé selon l'une des revendications 8 à 10, **caractérisé en ce que**, pour un diamètre d donné, le nombre n d'éléments de coquilles cylindriques intermédiaires est d'autant plus grand que le rayon R est petit et inversement, **que**, pour un rayon R donné, n est d'autant plus grand que d est petit.

12. Procédé selon l'une des revendications 8 à 10, **caractérisé en ce que** après le tronçonnage des coquilles, les éléments tronçonnés sont conditionnés dans la position qu'ils occupaient avant tronçonnage et de préférence conservés sous cette forme jusqu'à leur exploitation sur le chantier.

13. Procédé selon la revendication 12, **caractérisé en ce que** l'on maintient en place les éléments tronçonnés grâce à un film rétractable.

**Claims**

1. Product comprising one or a plurality of cylindrical insulating shell components obtained from insulating shells in the shape of straight cylinders, and which are intended to form an insulating sleeve about an elbow having an angle $\alpha$ of a pipe (12), characterised in that n intermediate shell components (11), which are identical if there are several of them, are cylinders of which the surfaces (6, 7) belong to planes which form a dihedron, of which the bisecting plane is perpendicular to the axis of the cylinder; in that their two substantially flat surfaces (6, 7) which have an elliptical contour, form angles respectively of + $\beta$ and - $\beta$ with the straight cross-sections of the shells, such that:

$$\beta = \alpha/(2n + 2);$$

and their longest generatrix has a length b such that:

$$b = 2 (R + d/2 + e) \, tg\beta$$

in which R is the radius of curvature of the pipe, d is its diameter and e is the thickness of the shell walls; and in that straight parts of the cylindrical insulating shells intended to be adjacent the elbows, end in surfaces (6, 7) of which the angles form an angle $\beta$ with the straight cross-sections of the shells.

2. Product comprising one or a plurality of cylindrical insulating shell components obtained from insulating shells in the shape of straight cylinders, and which are intended to form an insulating sleeve about an elbow having an angle $\alpha$ of a pipe, characterised in that n intermediate shell components (11), which are identical if there are several of them, are cylinders of which the surfaces (6, 7) belong to planes which form a dihedron, of which the bisecting plane is perpendicular to the axis of the cylinder; in that their two substantially flat surfaces which have an elliptical contour, form angles respectively of $+\beta$ and $-\beta$ with the straight cross-sections of the shells, such that:

$$\beta = \alpha/2n;$$

and their longest generatrix has a length b such that:

$$b = 2 (R + d/2 + e) \, tg\beta$$

in which R is the radius of curvature of the pipe, d is its diameter and e is the thickness of the shell walls.

3. Product according to Claim 2, characterised in that the straight parts of the insulating shells intended to be adjacent the elbow, end in straight cross-sections.

4. Product according to any one of the preceding Claims, characterised in that the intermediate cylindrical shell components and optionally the adjacent straight parts are packaged such as to reform all or part of the original cylindrical insulating shell.

5. Product according to Claim 4, characterised in that a heat-shrink film maintains the intermediate cylindrical components and optionally the straight parts in position.

6. Product according to any one of the preceding Claims, characterised in that the surfaces (21, 22) of the shell components (20) have components which are in relief (24) or recessed (23), of which the shape is symmetrical relative to the axes of the said surfaces; and in that the associated surfaces of the parts of adjacent shells have a complementary shape.

7. Product according to Claim 6, characterised in that the components in relief are straight ribs which are oriented according to the small axis of the elliptical contour of the surfaces.

8. Method of producing the insulation of a pipe elbow having an angle $\alpha$, a radius of curvature R, and a diameter d, from insulating shells in the shape of a straight cylinder which has an inner diameter d and thickness e, characterised in that the cylindrical insulating shell in the shape of a straight cylinder is cut according to substantially flat cross-sections, all of which are perpendicular to a single plane passing through its axis, the cutting planes forming angles alternately of $+\beta$ and $-\beta$ relative to the straight cross-sections of the shell, such that:

$$\beta = \alpha/(2n + 2),$$

the number of cuts being n + 1; in that the shell components obtained have their longest generatrix equal to b such that:

$$b = 2 (R + d/2 + e) \, tg\beta$$

and the residual straight parts and the intermediate cylindrical shell components are assembled such as to obtain the maximum angle possible.

9. Method of producing the insulation of a pipe elbow having an angle $\alpha$, a radius of curvature R, and a diameter d, from insulating shells in the shape of a straight cylinder which has an inner diameter d and thickness e, characterised in that such a cylindrical insulating shell is cut according to substantially flat cross-sections, all of which are perpendicular to a single plane passing through its axis, these planes forming angles of $+\beta$ and $-\beta$ alternately with the straight cross-sections of the shell such that:

$$\beta = \alpha/2n,$$

the shell components thus obtained having their largest generatrix of a length b such that:

$$b = 2 (R + d/2 + e) \, tg\beta;$$

and in that the pipe elbow is provided with n shell components thus obtained, the adjacent straight shell components ending in straight cross-sections.

10. Method according to either of Claims 8 or 9, characterised in that immediately after the intermediate or straight shell components have been put into place, they are wrapped in adhesive flexible film or fabric.

11. Method according to any one of Claims 8 to 10, characterised in that for a specific diameter d, the number n of intermediate cylindrical shell components is all the greater, the smaller the radius R, and conversely, for a specific radius R, n is all the greater the smaller d.

12. Method according to any one of Claims 8 to 10, characterised in that after the shell components have been cut, the cut components are packaged in the position they occupied before being cut, and are preferably retained in this form until they are used on the site.

13. Method according to Claim 12, characterised in that the cut components are maintained in place by means of a shrink-film.

**Patentansprüche**

1. Produkt, welches aus einem oder mehreren zylindrischen Rohrdämmschalenteilen besteht, die aus Rohrdämmschalen mit der Form von geraden Zylindern gefertigt und für die Herstellung einer Dämmhülse um einen Bogen mit einem Winkel $\alpha$ einer Rohrleitung (12) bestimmt sind, *dadurch gekennzeichnet, daß* n Rohrschalen-Zwischenteile (11), die im Falle einer Mehrzahl identisch sind, Zylinder sind, deren Oberflächen (6, 7) Ebenen angehören, welche einen Flächenwinkel bilden, dessen Halbierungsebene senkrecht zur Achse des Zylinders ist, *daß* ihre beiden im wesentlichen planen Oberflächen (6, 7) mit elliptischem Umriß mit den senkrechten Querschnitten der Rohrschalen einen Winkel $+\beta$ bzw. $-\beta$ bilden, wie:

$$\beta = \alpha/(2n + 2)$$

*daß* ihre längste Mantellinie eine Länge b aufweist, wie:

$$b = 2(R + d/2 + e) \tan\beta$$

wobei R der Radius der Rohrkrümmung, d ihr Durchmesser, und e die Dicke der Schalenwandungen ist, sowie *dadurch, daß* geradlinige Abschnitte der zylindrischen Rohrdämmschalen, die benachbart zu den Bögen angeordnet sein sollen, in Flächen (6, 7) enden, deren Winkel mit den senkrechten Querschnitten der Rohrschalen einen Winkel $\beta$ bilden.

2. Produkt, welches aus einem oder mehreren zylindrischen Rohrdämmschalenteilen besteht, die aus Rohrdämmschalen mit der Form von geraden Zylindern gefertigt und für die Herstellung einer Dämmhülse um einen Rohrbogen mit einem Winkel $\alpha$ bestimmt sind, *dadurch gekennzeichnet, daß* n Rohrschalen-Zwischenteile (11), die im Falle einer Mehrzahl identisch sind, Zylinder sind, deren Oberflächen (6, 7) Ebenen angehören, welche einen Flächenwinkel bilden, dessen Halbierungsebene senkrecht zur Achse des Zylinders ist, *daß* ihre beiden im wesentlichen planen Oberflächen mit elliptischem Umriß mit den senkrechten Querschnitten der Rohrschalen einen Winkel $+\beta$ bzw. $-\beta$ bilden, wie:

$$\beta = \alpha/2n$$

*und daß* ihre längste Mantellinie eine Länge b aufweist wie:

$$b = 2(R + d/2 + e) \tan\beta$$

wobei R der Radius der Rohrkrümmung, d ihr Durchmesser, und e die Dicke der Schalenwandungen ist.

3. Produkt nach Anspruch 2, *dadurch gekennzeichnet, daß* geradlinige Abschnitte der Rohrdämmschalen, die benachbart zu den Bögen angeordnet sein sollen, in senkrechten Querschnitten enden.

4. Produkt nach einem der vorhergehenden Ansprüche, *dadurch gekennzeichnet, daß* die zylindrischen Rohrschalen-Zwischenteile und gegebenenfalls die benachbarten geradlinigen Abschnitte so abgepackt sind, daß sie wieder die gesamte ursprüngliche zylindrische Rohrdämmschale oder einen Teil davon ergeben.

5. Produkt nach Anspruch 4, *dadurch gekennzeichnet, daß* eine wärmeaufschrumpfbare Folie die zylindrischen Zwischenteile und gegebenenfalls die geradlinigen Abschnitte an ihrem Platz hält.

6. Produkt nach einem der vorhergehenden Ansprüche, *dadurch gekennzeichnet, daß* die Oberflächen (21, 22) der Rohrschalenteile (20) erhabene Elemente (24) oder vertiefte Elemente (23) aufweisen, deren Form symmetrisch zu den Achsen dieser Oberflächen ist, *und dadurch, daß* die zugeordneten Oberflächen der benachbarten Rohrschalenabschnitte eine komplementäre Form aufweisen.

7. Produkt nach Anspruch 6, *dadurch gekennzeichnet, daß* die erhabenen Elemente geradlinige, entlang der kleinen Achse des elliptischen Umrisses der Oberflächen ausgerichtete Rippen sind.

8. Verfahren zur Durchführung der Dämmung eines Rohrbogens mit einem Winkel $\alpha$, einem Krümmungsradius R und einem Durchmesser d mittels Rohrdämmschalen mit der Form eines geraden Zylinders mit einem Innendurchmesser d und einer Dicke e, *dadurch gekennzeichnet, daß* die Rohrdämmschale mit der Form eines geraden Zylinders entlang im wesentlichen planer Schnitte geteilt wird, welche alle zu einer gleichen durch die Achse der Rohrschale verlaufenden Ebene senkrecht sind, wobei die Schnittebenen mit den senkrechten Querschnitten der Rohrdämmschale abwechselnd einen Winkel $+\beta$ bzw. $-\beta$ bilden, wie:

$$\beta = \alpha/(2n + 2)$$

wobei die Zahl der Schnitte gleich n + 1 ist, *dadurch, daß* die größte Mantellinie der hergestellten Rohrdämmschalenteile gleich b ist, wie:

$$b = 2(R + d/2 + e) \tan\beta$$

*und dadurch, daß* die verbleibenden geradlinigen Abschnitte und die zylindrischen Rohrschalen-Zwischenteile derart zusammengesetzt werden, daß der größtmögliche Winkel hergestellt wird.

9. Verfahren zur Durchführung der Dämmung eines Rohrbogens mit einem Winkel $\alpha$, einem Krümmungsradius R und einem Durchmesser d mittels Rohrdämmschalen mit der Form eines geraden Zylinders mit einem Innendurchmesser d und einer Dicke e, *dadurch gekennzeichnet, daß* eine solche zylindrische Rohrdämmschale entlang im wesentlichen planer Schnitte geteilt wird, welche alle zu einer gleichen, durch die Achse der Rohrschale verlaufenden Ebene senkrecht sind, wobei diese Ebenen mit den senkrechten Querschnitten der Rohrschale abwechselnd einen Winkel $+\beta$ bzw. $-\beta$ bilden, wie:

$$\beta = \alpha/2n$$

wobei die derart hergestellten Rohrschalenteile ihre größte Mantellinie mit einer Länge b auf-weisen, wie:

$$b = 2(R + d/2 + e) \tan\beta$$

*und dadurch, daß* der Rohrbogen mit derart hergestellten Rohrschalenteilen versehen wird, wobei die benachbarten geradlinigen Abschnitte von Rohrschalen in senkrechten Querschnitten enden.

10. Verfahren nach Anspruch 8 oder 9, *dadurch gekennzeichnet, daß* die zylindrischen Rohrschalen-Zwischenteile oder die geradlinigen Abschnitte von Rohrschalen unmittelbar nach ihrer Anbringung mit einer flexiblen Folie oder einem Flächengewebe umhüllt werden, welche selbstklebend sind.

11. Verfahren nach einem der Ansprüche 8 bis 10, *dadurch gekennzeichnet, daß* bei einem vorgegebenen Durchmesser d die Anzahl n von zylindrischen Rohrschalen-Zwischenteilen umso größer ist, je kleiner der Radius R ist, *und daß* n umgekehrt bei einem vorgegebenen Radius R umso größer ist, je kleiner d ist.

12. Verfahren nach einem der Ansprüche 8 bis 10, *dadurch gekennzeichnet, daß* nach dem Teilen der Rohrschalen die abgetrennten Teile in der Position, die sie vor dem Abtrennen eingenommen haben, abgepackt und vorzugsweise bis zu ihrer Verwendung vor Ort in dieser Form gehalten werden.

13. Verfahren nach Anspruch 12, *dadurch gekennzeichnet, daß* die abgetrennten Teile mittels einer aufschrumpfbaren Folie an ihrem Platz gehalten werden.

FIG.1

FIG.2a

FIG.2b

FIG_3

FIG_4

EP 0 546 874 B1

FIG.5

FIG.6

13

FIG_7a

FIG_7b

20

25

22

21

24

23

26

25

20

21

23

26

24

22

EP 0 546 874 B1